# EUROPÄISCHE PATENTSCHRIFT

(11) **EP 3 450 481 B1**
(45) Veröffentlichungstag und Bekanntmachung des Hinweises auf die Patenterteilung: **21.10.2020**
(21) Anmeldenummer: 17188853.0
(22) Anmeldetag: 31.08.2017
(51) Int. Cl.: C08G 69/08, C08G 69/14, C08G 69/26, C08G 69/36, C08L 77/06

(54) **POLYAMID-FORMMASSE MIT HOHEM GLANZ UND HOHER KERBSCHLAGZÄHIGKEIT**
POLYAMIDE MOULDING MATERIAL HAVING HIGH GLOSS AND HIGH NOTCH IMPACT STRENGTH
MATIÉRE À MOULER EN POLYAMIDE À HAUTE BRILLANCE ET À RÉSILIENCE À L'IMPACT ÉLEVÉE

(43) Veröffentlichungstag der Anmeldung: 06.03.2019
(73) Patentinhaber: EMS-CHEMIE AG, 7013 Domat/Ems (CH)
(72) Erfinder: Wiedemann, Thomas, 7013 Domat/Ems (CH); Hoffmann, Botho, 7013 Domat/Ems (CH); Bass, Sepp, 7013 Domat/Ems (CH)
(74) Vertreter: Pfenning, Meinig & Partner mbB

(56) Entgegenhaltungen:
- EP-A2- 2 107 083
- JP-A- H07 150 034

## Beschreibung

Die vorliegende Erfindung betrifft Polyamid-Formmassen mit hohem Glanz und hoher Kerbschlagzähigkeit und Formkörper aus diesen Polyamid-Formmassen.

Um die Schlagzähigkeit von Polyamid-Formmassen zu erhöhen, können Schlagzähmodifikatoren zugesetzt werden. Eine breite Palette dieser Verbindungen ist kommerziell verfügbar und eine Reihe von schlagzähmodifizierten Polyamid-Formmassen wurde im Stand der Technik beschrieben.

EP 0156 523 A2 betrifft hochschlagfeste Polyamidharze, die ein amorphes Polyamid und dispergierte Teilchen eines Schlagzähmodifikators enthalten, der gepfropfte Bernsteinsäureanhydridgruppen enthält. Der Schlagzähmodifikator hat eine Teilchengröße von weniger als 360 nm und liegt im Harz in einer Menge von mindestens 15 Gew.-% vor.

EP 2 107 083 A2 beschreibt eine Polyamid-Formmasse, enthaltend a) 95 bis 51 Gew.-% eines amorphen Copolyamids der Formel PA MACMI/MACMT/12 mit einem MACMI-Anteil im Copolyamid im Bereich von 5 bis 95 Gew.-%, einem MACMT-Anteil im Bereich von 0 bis 90 Gew.-% und einem LC12-Anteil im Bereich von 5 bis 60 Gew.-%, wobei die Summe dieser drei Anteile im Copolyamid a) 100 Gew.-% beträgt, b) 5 bis 49 Gew.-% eines amorphen oder mikrokristallinen oder teilkristallinen Polyamids der Formel PA (MACMX)x/(PACMY)y/(MXDU)u/(LCZ)z, wobei die Anteile x, y, u und z der vier Monomergruppen jeweils zwischen 0 und 100 Gew.-% liegen, die Summe dieser vier Anteile im Polyamid b) 100 Gew.-% beträgt; X, Y und U Dicarbonsäuren, ausgewählt aus der Gruppe bestehend aus DC4, DC6, DC9, DC10, DC11, DC12, DC13, DC14, DC15 bis DC36, und LCZ Lactame oder entsprechende Aminocarbonsäuren ausgewählt aus der Gruppe bestehend aus LC4, LC6, LC11 und LC12 bedeuten, c) 1 bis 30 Gew.-% mindestens eines Schlagzähmodifikators, sowie d) 0 bis 80 Gew.-% mindestens eines Additivs, wobei die Summe der Komponenten a), b), c) und d) 100 Gew.-% beträgt.

JP 19860203494 A betrifft amorphe Polyamid-Zusammensetzungen enthaltend ein amorphes Polyamid und ein Ethylencopolymer modifiziert mit einer ungesättigten Carbonsäure.

Die Polyamid-Formmassen aus dem Stand der Technik weisen hohe Schlagzähigkeiten auf, aber es gelang bislang nicht Polyamid-Formmassen bereit zu stellen, die neben hohen Schlagzähigkeiten auch einen hohen Glanz, insbesondere nach der Behandlung mit einer Seifenlösung, aufweisen. Da Polyamid-Formmassen häufig in Bereichen verwendet werden, wie z.B. der Spielzeugindustrie oder in Sport-, Freizeit- oder Haushaltsartikeln, in denen eine Reinigung der Polyamid-Formkörper unumgänglich ist, stellt der Erhalt von guten Glanzeigenschaften nach dem Reinigen eine wichtige Anforderung an Polyamid-Formmassen dar.

Ausgehend davon bestand die Aufgabe der vorliegenden Erfindung darin Polyamid-Formmassen bereit zu stellen, die nach der Behandlung mit einer Seifenlösung einen hohen Glanz aufweisen und die auch eine hohe Kerbschlagzähigkeit aufweisen. Darüber hinaus sollen die Polyamid-Formmassen gute Steifigkeiten aufweisen, die vorzugsweise durch den Zug-E-Modul ausgedrückt werden.

Diese Aufgabe wird durch die Polyamid-Formmassen gemäß Anspruch 1 gelöst. Diese Polyamid-Formmasse enthält die folgenden Komponenten oder besteht aus diesen Komponenten:
(A) 84,5 bis 97,0 Gew.-% mindestens eines amorphen oder mikrokristallinen Copolyamids ausgewählt aus der Gruppe bestehend aus PA 61/6T/MACMI/MACMT/PACMI/PACMT/Y, PA 6I/6T/MACMI/MACMT/Y und Mischungen daraus; wobei das Monomer Y 7 bis 14 Kohlenstoffatome besitzt und ausgewählt ist aus der Gruppe bestehend aus Lactamen, ω-Aminosäuren und Mischungen hiervon;
(B) 3,0 bis 9,5 Gew.-% mindestens eines funktionalisierten Schlagzähmodifikators, bestehend aus den Monomeren
   Ba) Ethylen;
   Bb) Propylen; und
   Bc) 1-Buten;
      wobei die Funktionalisierung durch Copolymerisation und/oder durch Pfropfung mit einer Verbindung ausgewählt aus der Gruppe bestehend aus ungesättigten Carbonsäuren, ungesättigten Carbonsäurederivaten, ungesättigten Glycidylverbindungen und Mischungen daraus erfolgt;
(C) 0 bis 6 Gew.-% mindestens eines Zusatzstoffes;
   wobei sich die Gewichtsanteile der Komponenten (A) bis (C) auf 100 Gew.-% ergänzen.

Vorteilhafte Ausführungsformen dieser Polyamid-Formmassen werden in den Ansprüchen 2 bis 13 angegeben. Der Ansprüche 14 und 15 betreffen Formkörper aus diesen Polyamid-Formmassen.

### Begriffsdefinitionen

### Schreibweisen und Abkürzungen für Polyamide und deren Monomere

Im Sinne der vorliegenden Erfindung wird unter dem Begriff "Polyamid" (Abkürzung PA) ein Oberbegriff verstanden, dieser umfasst Homopolyamide und Copolyamide. Die gewählten Schreibweisen und Abkürzungen für Polyamide und deren Monomere entsprechen den in der ISO-Norm 16396-1 (2015, (D)) festgelegten. Die darin verwendeten Abkürzungen werden im Folgenden synonym zu den IUPAC Namen der Monomere verwendet. Insbesondere kommen folgende Abkürzungen für Monomere in der vorliegenden Anmeldung vor MACM für Bis(4-amino-3-methyl-cyclohexyl)methan (auch als 3,3'-Dimethyl-4,4'-diaminodicyclohexylmethan bezeichnet, CAS-Nr. 6864-37-5), PACM für Bis(4-amino-cyclohexyl)methan (auch als 4,4'-Diaminodicyclohexylmethan bezeichnet, CAS-Nr. 1761-71-3), T für Terephthalsäure (CAS-Nr. 100-21-0), I für Isophthalsäure (CAS-Nr. 121-95-5), 12 für Dodecandisäure (auch 1,10-Decandicarbonsäure genannt, CAS-Nr. 693-23-2), 6 für 1,6-Hexandiamin (CAS-Nr. 124-09-4), 12 für Laurinlactam (CAS-Nr. 947-04-6) und 12 für ω-Aminododecansäure (CAS-Nr. 693-57-2).

### Amorphe oder mikrokristalline Polyamide

Amorphe oder mikrokristalline Polyamide zeigen in der dynamischen Differenz-Kalorimetrie (engl. Differential Scanning Calorimetry, DSC) nach ISO 11357 (2013) bei einer Aufheizrate von 20 K/min bevorzugt eine Schmelzwärme von maximal 50 J/g, besonders bevorzugt von maximal 25 J/g, ganz besonders bevorzugt 0 bis 22 J/g.

Mikrokristalline Polyamide sind teilkristalline Polyamide und besitzen daher einen Schmelzpunkt. Sie haben jedoch eine Morphologie, bei der die Kristallite eine so kleine Dimension haben, dass eine daraus hergestellte Platte mit einer Dicke von 2 mm noch transparent ist, d.h. ihre Lichttransmission mindestens 75 % beträgt, gemessen nach ASTM D 1003-13 (2013).

Amorphe Polyamide weisen, verglichen mit den mikrokristallinen Polyamiden, eine geringere Schmelzwärme auf. Die amorphen Polyamide zeigen in der dynamischen Differenz-Kalorimetrie (engl. Differential Scanning Calorimetry, DSC) nach ISO 11357 (2013) bei einer Aufheizrate von 20 K/min bevorzugt eine Schmelzwärme von maximal 5 J/g, besonders bevorzugt von maximal 3 J/g, ganz besonders bevorzugt von 0 bis 1 J/g und besitzen keinen Schmelzpunkt.

### Mengenangaben der Monomere

Die Copolyamide der vorliegenden Erfindung enthalten neben Dicarbonsäuren und Diaminen auch Lactame oder ω-Aminosäuren zu X Mol-%, daher beträgt die Summe aller Diamine nur noch (50 - 0,5 X) Mol-% und die Summe aller Dicarbonsäuren (50 - 0,5 X) Mol-%, bezogen auf 100 Mol-% für das Copolyamid.

Bei den Mengenangaben zu den Dicarbonsäuren und Diaminen der Copolyamide gilt, dass die Summe der molaren Mengen aller Diamine im Wesentlichen gleich der Summe der molaren Mengen aller Dicarbonsäuren ist. Im Wesentlichen gleich bedeutet dabei einen maximalen Überschuss der Dicarbonsäuren oder der Diamine von 3 %, d.h. das molare Verhältnis von Dicarbonsäuren zu Diaminen beträgt 1,03 : 1 bis 1 : 1,03. Bevorzugt ist ein maximaler Überschuss der Dicarbonsäuren oder der Diamine von 2 %, d.h. das molare Verhältnis von Dicarbonsäuren zu Diaminen beträgt 1,02 : 1 bis 1 : 1,02.

Der Überschuss dient zum Ausgleich von Verlusten an Monomer und/oder zur Regelung der relativen Viskosität des Polyamids und somit der Molmasse.

Die Mengenangaben bezüglich der Monomere sind dabei so zu verstehen, dass sich ein entsprechendes Molverhältnis dieser bei der Polykondensation eingesetzten Monomere auch in den derart durch Polykondensation hergestellten Copolyamiden wiederfindet.

### Allgemeines zu Mengenangaben

Die Polyamid-Formmassen gemäß der vorliegenden Erfindung enthalten die Komponenten (A), (B) und gegebenenfalls (C) oder bestehen bevorzugt ausschließlich aus diesen, es gilt dabei die Maßgabe, dass sich die Komponenten (A), (B) und (C) in Summe auf 100 Gew.-% ergänzen. Die festgelegten Bereiche der Mengenangaben für die einzelnen Komponenten (A), (B) und (C) sind so zu verstehen, dass innerhalb der vorgegebenen Bereiche eine willkürliche Menge für jede der Einzelkomponenten ausgewählt werden kann, sofern die strikte Maßgabe erfüllt wird, dass die Summe aller Komponenten (A) bis (C) 100 Gew.-% ergibt.
Alle im Copolypolyamid (A) enthaltenen Monomere ergänzen sich in Summe auf 100 Mol-%. Die festgelegten Bereiche der Mengenangaben für die einzelnen Monomere sind so zu verstehen, dass innerhalb der vorgegebenen Bereiche eine willkürliche Menge für jede der Einzelkomponenten ausgewählt werden kann, sofern die strikte Maßgabe erfüllt wird, dass die Summe aller im Copolyamid (A) enthaltenen Monomere 100 Mol-% ergibt.

Alle im Schlagzähmodifikator (B) enthaltenen Monomere ergänzen sich in Summe auf 100 Mol-%. Die festgelegten Bereiche der Mengenangaben für die einzelnen Monomere sind so zu verstehen, dass innerhalb der vorgegebenen Bereiche eine willkürliche Menge für jede der Einzelkomponenten ausgewählt werden kann, sofern die strikte Maßgabe erfüllt wird, dass die Summe aller im Copolyamid (B) enthaltenen Monomere 100 Mol-% ergibt.

### Funktionalisierung von Komponente (B)

Komponente (B) kann durch Copolymerisation oder durch Pfropfen funktionalisiert werden. Im Sinne der vorliegenden Erfindung meint Funktionalisieren durch Copolymerisation den Einbau der funktionalisierenden Verbindung in die Hauptkette von Komponente (B) als Bestandteil dieser Hauptkette. Unter der Funktionalisierung von Komponente (B) durch Pfropfen wird hingegen das Anbinden der funktionalisierenden Verbindung an die Hauptkette verstanden, so dass Seitenketten entstehen.

### Komponente (A): Copolyamid

Das Copolyamid (A) gemäß der vorliegenden Erfindung ist amorph oder mikrokristallin und ist ausgewählt aus der Gruppe bestehend aus PA 61/6T/MACMI/MACMT/PACMI/PACMT/Y, PA 61/6T/MACMI/MACMT/Y und Mischungen daraus; wobei das Monomer Y 7 bis 14 Kohlenstoffatome besitzt und ausgewählt ist aus der Gruppe bestehend aus Lactamen, ω-Aminosäuren und Mischungen hiervon.

Gemäß einer bevorzugten Ausführungsform der vorliegenden Erfindung ist das Copolyamid amorph.

Eine weitere bevorzugte Ausführungsform vorliegender Erfindung sieht vor, dass das Copolyamid (A) aus den folgenden Monomeren a1) bis a6) aufgebaut ist:
a1) 4 bis 30 Mol-% Bis(3-methyl-4-amino-cyclohexyl)methan;
a2) 18 bis 45 Mol-% 1,6 Hexandiamin;
a3) 0 bis 10 Mol-% Bis(4-amino-cyclohexyl)methan;
a4) 18 bis 30 Mol-% Isophthalsäure;
a5) 18 bis 30 Mol-% Terephthalsäure; und
a6) 0,1 bis 10 Mol-% Monomer Y, wobei das Monomer Y 7 bis 14 Kohlenstoffatome besitzt und ausgewählt ist aus der Gruppe bestehend aus Lactamen, ω-Aminosäuren und Mischungen hiervon.

Dabei ergänzen sich die Anteile der Monomere a1) bis a6) im Copolyamid auf 100 Mol-% und die Summe aller Diamin-Monomere entspricht im Wesentlichen der Summe aller Dicarbonsäure-Monomere.

Ein weiteres bevorzugtes Copolyamid (A) ist ein amorphes Copolyamid PA 6I/6T/MACMI/MACMT/PACMI/PACMT/Y, welches aus den Monomeren,
a1) 4 bis 30 Mol-% Bis(3-methyl-4-amino-cyclohexyl)methan;
a2) 18 bis 45 Mol-% 1,6 Hexandiamin;
a3) 0,1 bis 10 Mol-% Bis(4-amino-cyclohexyl)methan;
a4) 18 bis 30 Mol-% Isophthalsäure;
a5) 18 bis 30 Mol-% Terephthalsäure; und
a6) 0,1 bis 10 Mol-% Monomer Y, wobei das Monomer Y 7 bis 14 Kohlenstoffatome besitzt und ausgewählt ist aus der Gruppe bestehend aus Lactamen, ω-Aminosäuren und Mischungen hiervon;
aufgebaut ist. Dabei ergänzen sich die Anteile der Monomere a1) bis a6) im Copolyamid auf 100 Mol-% und die Summe aller Diamin-Monomere entspricht im Wesentlichen der Summe aller Dicarbonsäure-Monomere. Besonders bevorzugt ist es dabei, dass das Copolyamid (A) aus den Monomeren,
a1) 5 bis 20 Mol-%, bevorzugt 5,5 bis 15 Mol-% und besonders bevorzugt 6,5 bis 10 Mol-% Bis(3-methyl-4-amino-cyclohexyl)methan;
a2) 20 bis 43 Mol-%, bevorzugt 25,5 bis 41 Mol-% und besonders bevorzugt 34 bis 40 Mol-% 1,6 Hexandiamin;
a3) 0,1 bis 8 Mol-%, bevorzugt 0,5 bis 7 Mol-% und besonders bevorzugt 2 bis 4 Mol-% Bis(4-amino-cyclohexyl)methan;
a4) 20 bis 29,5 Mol-%, bevorzugt 22 bis 27 Mol-% und besonders bevorzugt 23 bis 25,75 Mol-% Isophthalsäure;
a5) 20 bis 29,5 Mol-%, bevorzugt 22 bis 27 Mol-% und besonders bevorzugt 23 bis 25,75 Mol-% Terephthalsäure; und
a6) 1 bis 8 Mol-%, bevorzugt 2 bis 5 Mol-% und besonders bevorzugt 2,5 bis 4 Mol-% Monomer Y, wobei das Monomer Y 7 bis 14 Kohlenstoffatome besitzt und ausgewählt ist aus der Gruppe bestehend aus Lactamen, ω-Aminosäuren und Mischungen hiervon;
aufgebaut ist. Dabei ergänzen sich die Anteile der Monomere a1) bis a6) im Copolyamid auf 100 Mol-% und die Summe aller Diamin-Monomere entspricht im Wesentlichen der Summe aller Dicarbonsäure-Monomere.

Gemäß einer anderen Ausführungsform der vorliegenden Erfindung ist Komponente (A) ein amorphes Copolyamid PA 6I/6T/MACMI/MACMT/Y, welches aus den Monomeren,
a1) 4 bis 30 Mol-% Bis(3-methyl-4-amino-cyclohexyl)methan;
a2) 18 bis 45 Mol-% 1,6 Hexandiamin;
a4) 18 bis 30 Mol-% Isophthalsäure;
a5) 18 bis 30 Mol-% Terephthalsäure; und
a6) 0,1 bis 10 Mol-% Monomer Y, wobei das Monomer Y 7 bis 14 Kohlenstoffatome besitzt und ausgewählt ist aus der Gruppe bestehend aus Lactamen, ω-Aminosäuren und Mischungen hiervon;
aufgebaut ist. Dabei ergänzen sich die Anteile der Monomere a1), a2) und a4 bis a6) im Copolyamid auf 100 Mol-% und die Summe aller Diamin-Monomere entspricht im Wesentlichen der Summe aller Dicarbonsäure-Monomere.

Dabei ist es besonders bevorzugt, dass Komponente (A) aus den Monomeren,
a1) 5 bis 20 Mol-%, bevorzugt 5,5 bis 15 Mol-% und besonders bevorzugt 6,5 bis 12 Mol-% Bis(3-methyl-4-amino-cyclohexyl)methan;
a2) 26 bis 43 Mol-%, bevorzugt 32,5 bis 42 Mol-% und besonders bevorzugt 36 bis 41,5 Mol-% 1,6 Hexandiamin;
a4) 20 bis 29,5 Mol-%, bevorzugt 22 bis 27 Mol-% und besonders bevorzugt 23 bis 25,75 Mol-% Isophthalsäure;
a5) 20 bis 29,5 Mol-%, bevorzugt 22 bis 27 Mol-% und besonders bevorzugt 23 bis 25,75 Mol-% Terephthalsäure; und
a6) 1 bis 8 Mol-%, bevorzugt 2 bis 5 Mol-% und besonders bevorzugt 2,5 bis 4 Mol-% Monomer Y, wobei das Monomer Y 7 bis 14 Kohlenstoffatome besitzt und ausgewählt ist aus der Gruppe bestehend aus Lactamen, ω-Aminosäuren und Mischungen hiervon;
aufgebaut ist. Dabei ergänzen sich die Anteile der Monomere a1), a2) und a4) bis a6) im Copolyamid auf 100 Mol-% und die Summe aller Diamin-Monomere entspricht im Wesentlichen der Summe aller Dicarbonsäure-Monomere.

Gemäß einer anderen bevorzugten Ausführungsform der vorliegenden Erfindung ist das Monomer Y der Komponente (A) ausgewählt aus der Gruppe bestehend aus Lactamen und ω-Aminosäuren, bevorzugt bestehend aus Önanthlactam (7 Kohlenstoffatome), Capryllactam (8 Kohlenstoffatome), Caprinlactam (10 Kohlenstoffatome), Lactam 11 (11 Kohlenstoffatome), Laurinlactam (12 Kohlenstoffatome), 1,7-Aminoheptansäure, 1,8-Aminooctansäure, 1,11-Aminoundecansäure und 1,12-Aminododecansäure und Mischungen hiervon. Besonders bevorzugt ist das Monomer Y ausgewählt aus der Gruppe bestehend aus Lactam 11 (11 Kohlenstoffatome), Laurinlactam (12 Kohlenstoffatome), 1,11-Aminoundecansäure und 1,12-Aminododecansäure und Mischungen hiervon. Ganz besonders ist das Monomer Y ausgewählt aus der Gruppe bestehend aus Laurinlactam (12 Kohlenstoffatome) und 1,12-Aminododecansäure und Mischungen hiervon, wobei Laurinlactam (12 Kohlenstoffatome) am bevorzugtesten ist.

Gemäß einer weiteren bevorzugten Ausführungsform der vorliegenden Erfindung beträgt die relative Viskosität der Copolyamide (A) 1,40 bis 1,80 und bevorzugt 1,50 bis 1,70, gemessen an einer Lösung von 0,5 g Copolyamid in 100 ml m-Kresol bei 20 °C.

Eine weitere bevorzugte Ausführungsform der vorliegenden Erfindung sieht vor, dass die Glasübergangstemperatur (Tg) der Copolyamide (A) 155 bis 165 °C, gemessen nach ISO 11357-2 und -3 (2013), beträgt.

Nach einer bevorzugten Ausführungsform liegt der Anteil von Komponente (A) in der Polyamid-Formmasse bevorzugt im Bereich von 87,5 bis 96,5 Gew.-%, besonders bevorzugt von 89 bis 96 Gew.-% und ganz besonders bevorzugt von 90,5 bis 94,99 Gew.-%, bezogen auf die Summe der Komponenten (A) bis (C).

### Komponente (B): funktionalisierter Schlagzähmodifikator

Der funktionalisierte Schlagzähmodifikator (B) gemäß der vorliegenden Erfindung besteht aus den Monomeren Ba) Ethylen, Bb) Propylen; und Bc) 1-Buten. Er kann in Form eines Copolymeren oder einer Mischung mehrerer Copolymerer vorliegen. Für die Mischung können funktionalisierte Copolymere verwendet werden oder sie kann aus funktionalisierten und unfunktionalisierten Copolymeren bestehen.

Die Funktionalisierung erfolgt durch Copolymerisation und/oder durch Pfropfung mit einer Verbindung ausgewählt aus der Gruppe bestehend aus ungesättigten Carbonsäuren, ungesättigten Carbonsäurederivaten, ungesättigten Glycidylverbindungen und Mischungen daraus.

Die Funktionalisierung kann auch durch Copolymerisation und durch Pfropfung erfolgen, wobei die Funktionalisierung ausschließlich durch Pfropfung bevorzugt ist.

Gemäß einer bevorzugten Ausführungsform der vorliegenden Erfindung erfolgt die Funktionalisierung von Komponente (B) durch Copolymerisation und der Anteil der zur Funktionalisierung verwendeten Verbindung beträgt 3 bis 25 Gew.%, bevorzugt 4 bis 20 Gew.-% und besonders bevorzugt 4,5 bis 15 Gew.-%, bezogen auf die Gesamtmasse von Komponente (B).

Eine andere bevorzugte Ausführungsform der vorliegenden Erfindung sieht vor, dass die Funktionalisierung von Komponente (B) durch Pfropfung erfolgt und der Anteil der zur Funktionalisierung verwendeten Verbindung 0,3 bis 2,5 Gew.%, bevorzugt 0,4 bis 2,0 Gew.-% und besonders bevorzugt 0,5 bis 1,9 Gew.-%, bezogen auf die Gesamtmasse von Komponente (B), beträgt.

Nach einer weiteren bevorzugten Ausführungsform der vorliegenden Erfindung ist die zur Funktionalisierung von Komponente (B) verwendete Verbindung ausgewählt ist aus der Gruppe bestehend aus Acrylsäure, Methacrylsäure, Glycidylacrylsäure, Glycidylmethacrylsäure, Acrylsäureestern, Methacrylsäureestern, α-Ethylacrylsäure, Maleinsäure, Maleinsäureanhydrid, Fumarsäure, Itaconsäure, Itaconsäureanhydrid, Citraconsäure, Aconitsäure, Tetrahydrophthalsäure, Butenylsuccinsäure und Mischungen hiervon, wobei Maleinsäure, Maleinsäureanhydrid, Fumarsäure, Itaconsäure, Itaconsäureanhydrid, Aconitsäure und Mischungen hiervon bevorzugt sind, besonders bevorzugt ist Maleinsäureanhydrid.

Eine weitere bevorzugte Ausführungsform der vorliegenden Erfindung sieht vor, dass die Monomere Ba), Bb) und Bc) in Komponente (B) in den folgenden molaren Anteilen enthalten sind:
Ba) 65 bis 90 Mol-%, bevorzugt 65 bis 87 Mol-% und besonders bevorzugt 71 bis 84 Mol-%;
Bb) 8 bis 33 Mol-%, bevorzugt 10 bis 25 Mol-% und besonders bevorzugt 12 bis 20 Mol-%;
Bc) 2 bis 25 Mol-%, bevorzugt 3 bis 20 Mol-% und besonders bevorzugt 4 bis 9 Mol-%;
wobei sich die molaren Anteile der Monomere Ba), Bb) und Bc) auf 100 Mol-% ergänzen.

Liegt der Schlagzähmodifikator als Mischung vor, können mehrere Copolymere gemischt werden, die jeweils zwei der Monomere Ba) bis Bc), d.h. Ba) und Bb), Ba) und Bc) oder Bb) und Bc) enthalten, so dass in der Mischung die Monomere Ba) bis Bc) in den angegebenen molaren Anteilen vorliegen. Insbesondere bevorzugt besteht eine solche Mischung aus einem Copolymeren der Monomere Ba) und Bb) und einem Copolymeren der Monomere Ba) und Bc), so dass in der Mischung die Monomere Ba) bis Bc) in den angegebenen molaren Anteilen vorliegen.

Bevorzugt wird die Mischung in der Schmelze, z.B. in einem Extruder, homogenisiert. Dabei erfolgt auch gleichzeitig die Säuremodifikation durch Pfropfung, so dass der Modifizierungsgrad 0,3 bis 2,5 Gew.-%, bevorzugt 0,4 bis 2,0 Gew.-%, besonders bevorzugt 0,5 bis 1,9 Gew.-% beträgt, bezogen auf die gesamte Mischung, d.h. auf den gesamten funktionalisierten Schlagzähmodifikator (B).

Nach einer weiteren bevorzugten Ausführungsform der vorliegenden Erfindung liegt der Anteil von Komponente (B) in der Polyamid-Formmasse im Bereich von 3,5 bis 8,5 Gew.-%, bevorzugt von 4,0 bis 8,0 Gew.-% und besonders bevorzugt von 5,0 bis 7,5 Gew.%, bezogen auf die Summe der Komponenten (A) bis (C).

Ein besonders bevorzugter funktionalisierter Schlagzähmodifikator (B) wird von Mitsui Chemicals unter dem Handelsnamen Tafmer MC201 kommerzialisert. Dabei handelt es sich um einen Blend aus Ethylen/Propylen-Copolymer (20 Mol-% Propylen) und Ethylen/Buten-1-Copolymer (15 Mol-% Buten-1) im Gewichtsverhältnis 67 : 33, der mit 0,6 Gew.-% Maleinsäureanhydrid über Pfropfung funktionalisiert wurde.

### Komponente C: Zusatzstoff

Die Polyamid-Formmasse gemäß der vorliegenden Erfindung kann optional auch mindestens einen Zusatzstoff enthalten.

Gemäß einer bevorzugten Ausführungsform der Erfindung ist dieser mindestens eine Zusatzstoff (C) ausgewählt aus der Gruppe bestehend aus anorganischen Stabilisatoren, organischen Stabilisatoren, insbesondere Antioxidantien, Antiozonantien und/oder Lichtschutzmitteln, Gleitmitteln, Farbstoffen, Markierungsmitteln, anorganischen Pigmenten, organischen Pigmenten, Entformungsmitteln, kettenverlängernden Additiven, Antiblockmitteln, optischen Aufhellern und Mischungen davon.

Nach einer bevorzugten Ausführungsform der vorliegenden Erfindung ist der Anteil von Komponente (C) in der Polyamid-Formmasse im Bereich von 0 bis 4 Gew.-%, bevorzugt von 0 bis 3 Gew.-% und besonders bevorzugt von 0,01 bis 2 Gew.%, bezogen auf die Summe der Komponenten (A) bis (C).

### Polyamid-Formmasse

Gemäß einer bevorzugten Ausführungsform der vorliegenden Erfindung enthält die Polyamid-Formmasse die Komponenten (A) bis (C) oder besteht aus diesen Komponenten in den folgenden Mengenanteilen.

Der Anteil von Komponente (A) in der Polyamid-Formmasse liegt bevorzugt im Bereich von 87,5 bis 96,5 Gew.-%, besonders bevorzugt von 89 bis 96 Gew.-% und ganz besonders bevorzugt von 90,5 bis 94,99 Gew.-%, bezogen auf die Summe der Komponenten (A) bis (C).

Der Anteil von Komponente (B) in der Polyamid-Formmasse liegt im Bereich von 3,5 bis 8,5 Gew.-%, bevorzugt von 4,0 bis 8,0 Gew.-% und besonders bevorzugt von 5,0 bis 7,5 Gew.%, bezogen auf die Summe der Komponenten (A) bis (C).

Der Anteil von Komponente (C) in der Polyamid-Formmasse liegt im Bereich von 0 bis 4 Gew.-%, bevorzugt von 0 bis 3 Gew.-% und besonders bevorzugt von 0,01 bis 2 Gew.%, bezogen auf die Summe der Komponenten (A) bis (C).

Nach einer bevorzugten Ausführungsform der vorliegenden Erfindung liegt der Anteil von Komponente (A) in der Polyamid-Formmasse bevorzugt im Bereich von 87,5 bis 96,5 Gew.-%, besonders bevorzugt von 89 bis 96 Gew.-% und ganz besonders bevorzugt von 90,5 bis 94,99 Gew.-%, bezogen auf die Summe der Komponenten (A) bis (C) und der Anteil von Komponente (B) in der Polyamid-Formmasse liegt im Bereich von 3,5 bis 8,5 Gew.-%, bevorzugt von 4,0 bis 8,0 Gew.-% und besonders bevorzugt von 5,0 bis 7,5 Gew.%, bezogen auf die Summe der Komponenten (A) bis (C) und der Anteil von Komponente (C) in der Polyamid-Formmasse liegt im Bereich von 0 bis 4 Gew.-%, bevorzugt von 0 bis 3 Gew.-% und besonders bevorzugt von 0,01 bis 2 Gew.%, bezogen auf die Summe der Komponenten (A) bis (C).

Nach einer anderen bevorzugten Ausführungsform der vorliegenden Erfindung beträgt der nach DIN EN ISO 2813 (2015) bestimmte Glanz 60° nach Behandlung des Prüfkörpers mit einer Seifenlösung mindestens 75 % und bevorzugt mindestens 80 %.

Eine weitere bevorzugte Ausführungsform vorliegender Erfindung sieht vor, dass die nach DIN EN ISO 179/2 eA (2000) bestimmte Kerbschlagzähigkeit der Polyamid-Formmasse mindestens 70 kJ/m², bevorzugt mindestens 75 kJ/m² und besonders bevorzugt mindestens 80 kJ/m² beträgt.

Gemäß einer weiteren Ausführungsform der vorliegenden Erfindung beträgt der nach DIN EN ISO 527 (1997) bestimmte Zug-E-Modul mindestens 2100 MPa, bevorzugt mindestens 2200 MPa und besonders bevorzugt mindestens 2300 MPa.

Nach einer weiteren bevorzugten Ausführungsform vorliegender Erfindung beträgt der nach DIN EN ISO 2813 (2015) bestimmte Glanz 60° mindestens 80 %, bevorzugt mindestens 85 % und besonders bevorzugt mindestens 90 %.

Eine weitere bevorzugte Ausführungsform der vorliegenden Erfindung sieht vor, dass die Polyamid-Formmasse genau ein Copolyamid als Komponente (A) und genau einen funktionalisierten Schlagzähmodifikator als Komponente (B) enthält.

### Polyamid-Formkörper

Die vorliegende Erfindung betrifft weiterhin Formkörper, die die erfindungsgemäße Polyamid-Formmasse enthalten oder die vollständig aus dieser Polyamid-Formmasse bestehen.

Nach einer bevorzugten Ausführungsform sind die Formkörper ausgewählt aus der Gruppe bestehend aus Dekorelementen, insbesondere im Automobilinnenraum oder Modebereich, Sportartikeln, insbesondere Skischuhen, Zwischensohlen für Sportschuhe, Freizeitartikeln, Spielzeug, insbesondere Konstruktionselementen, Bausteinen, Figuren oder Modellen, Haushaltsartikeln, insbesondere Schüsseln, Dosen oder Becher, Bauteilen von Brillen, Möbelbeschläge, Einlegesohlen, Bau- und Sichtteile für Geräte im Sanitär-, Hygienebereich und Kosmetikbereich, Teile von Sicherheitsschuhen, insbesondere Kappen, Gehäuse und Gehäuseteile für Elektro- und Elektronikgeräte, Schutzhüllen für Mobiltelefone, Sichtteilen im Computer und Telekommunikationsbereich, Rohren, Schläuchen und Bauteilen von E-Zigaretten.

Anhand der nachfolgenden Beispiele soll der erfindungsgemäße Gegenstand näher erläutert werden, ohne diesen auf die hier gezeigten spezifischen Ausführungsformen einschränken zu wollen.

### 1 Messmethoden

Im Rahmen dieser Anmeldung wurden die folgenden Messmethoden verwendet.

### Relative Viskosität

Die relative Viskosität wurde gemäß ISO 307 (2007) bei 20 °C bestimmt. Dazu wurden 0,5 g Polymergranulat in 100 ml m-Kresol eingewogen, die Berechnung der relativen Viskosität (RV) nach RV = t/t₀ erfolgte in Anlehnung an Abschnitt 11 der Norm.

### Glasübergangstemperatur (Tg)

Die Bestimmung der Glasübergangstemperatur erfolgte mittels Differential Scanning Calorimetry (DSC) nach ISO 11357-2 und -3 (2013) an Granulat mit einem Wassergehalt von unter 0,1 Gew.-%. Die DSC wurde bei jeder der beiden Aufheizungen mit einer Aufheizrate von 20 K/min durchgeführt. Nach der ersten Aufheizung wurde die Probe in Trockeneis abgeschreckt. Die Glasübergangstemperatur (Tg) wurde bei der zweiten Aufheizung bestimmt. Der Mittelpunkt des Glasübergangsbereichs, welcher als Glasübergangstemperatur (Tg) angegeben wurde, wurde nach der Methode "Half Height" ermittelt.

### Zug-E-Modul

Die Bestimmung des Zug-E-Moduls und der Zugfestigkeit wurde gemäß DIN EN ISO 527 (1997) bei 23°C mit einer Zuggeschwindigkeit von 1 mm/min an einem ISO-Zugstab (Typ A1, Masse 170 x 20/10 x 4) hergestellt gemäß der Norm: ISO/CD 3167 (2003), durchgeführt.

### Kerbschlagzähigkeit nach Charpy

Die Bestimmung der Kerbschlagzähigkeit nach Charpy wurde gemäß DIN EN ISO 179/2 eA (2000) bei 23°C an einem ISO-Prüfstab, Typ B1 (Masse 80 x 10 x 4 mm), hergestellt gemäß der Norm ISO/CD 3167, durchgeführt.

### Glanz 60° und Glanz 60° nach Waschtest

Der Glanz bei einem Messwinkel von 60° vor und nach dem Waschtest wurde nach DIN EN ISO 2813 (2015) auf einem Gloss Tector (ATP Messtechnik GmbH, Deutschland) bei 23 °C an Platten mit den Dimensionen 60 x 60 x 2 mm bestimmt.

### Waschtest

Fünf Platten wurden ganz oder teilweise in ein gerührtes, auf 63 ± 2 °C thermostatisiertes Seifenbad getaucht und dort für 30 ± 2 min belassen. Nach der Entnahme wurde die noch anhaftende Seifenlösung mit einem weissen Baumwolltuch vorsichtig abgewischt und der Glanz 60° an einer Stelle bestimmt, die untergetaucht war. Der in den Tabellen 3 und 4 angegebene Wert ist der arithmetische Mittelwert aus fünf Messungen. Das Seifenbad bestand aus destilliertem Wasser und 0,1 % Triton x-100. Triton x-100 ist ein nichtionisches Tensid der Dow Chemical Company, USA (Octylphenol Ethoxylat, CAS-Nr. 9002-93-1).

### Herstellung der Prüfkörper

Die Prüfkörper wurden auf einer Spritzgussmaschine der Firma Arburg, Modell Allrounder 420 C 1000-250 hergestellt. Dabei wurden aufsteigende Zylindertemperaturen von 280 °C bis 300 °C verwendet.
Die ISO-Zugstäbe und ISO-Prüfstäbe wurden bei einer Werkzeugtemperatur von 80 °C hergestellt.

Die 60 x 60 x 2 mm Platten für die Glanzmessung wurden mit einer Werkzeugtemperatur von 100 °C in einem polierten Werkzeug hergestellt.

Die Prüfkörper wurden, sofern nichts anderes angegeben ist, in trockenem Zustand verwendet; dazu wurden sie nach dem Spritzguss mindestens 48 h bei Raumtemperatur in trockener Umgebung, d.h. über Silicagel, gelagert.

### 2 Ausgangsmaterialien

Die in den Beispielen und Vergleichsbeispielen verwendeten Materialien werden in den Tabellen 1 und 2 zusammengefasst.

**Tabelle 1: In den Beispielen und Vergleichsbeispielen verwendete Copolyamide A1 bis (A5).**

| Komponenten | Beschreibung | Hersteller |
|---|---|---|
| Polyamid (A1) (erfindungsgemäß) | Amorphes Polyamid | EMS-CHEMIE AG (Schweiz) |
| | 6I/6T/MACMI/MACMT/PACMI/PACMT/12 aus 1,6-Hexandiamin (39,0 Mol-%), Bis(3-methyl-4-aminocyclohexyl)methan (7,1 Mol-%), Bis(4-aminocyclohexyl)methan (2,5 Mol-%), Isophthalsäure (24,3 Mol-%), Terephthalsäure (24,3 Mol-%) und Laurinlactam (2,8 Mol-%) | |
| | RV*: 1,60 | |
| | Glasübergangstemperatur: 159 °C | |
| | Zug-E-Modul: 2800 MPa (trocken, 23 °C) | |
| | Kerbschlagzähigkeit ,Charpy: 11 kJ/m² (trocken, 23 °C) | |
| Polyamid (A2) (erfindungsgemäß) | Amorphes Polyamid 61/6T/MACMI/MACMT/12 aus 1,6-Hexandiamin (39,0 Mol-%), Bis(3-methyl-4-aminocyclohexyl)methan (9,6 Mol-%), Isophthalsäure (24,3 Mol-%), Terephthalsäure (24,3 Mol-%) und Laurinlactam (2,8 Mol-%) | EMS-CHEMIE AG (Schweiz) |
| | RV*: 1,60 | |
| | Glasübergangstemperatur: 160 °C | |
| | Zug-E-Modul: 2800 MPa (trocken, 23 °C) | |
| | Kerbschlagzähigkeit, Charpy: 12 kJ/m2 (trocken, 23 °C) | |
| Polyamid (A3) (Vergleich) | Amorphes Polyamid 6I/6T aus 1,6-Hexandiamin (50 Mol-%), Isophthalsäure (33,5 Mol-%) und Terephthalsäure (16,5 Mol-%) | EMS-CHEMIE AG (Schweiz) |
| | RV*: 1,54 | |
| | Glasübergangstemperatur: 125 °C | |
| | Zug-E-Modul: 3000 MPa (trocken, 23 °C) | |
| | Kerbschlagzähigkeit, Charpy: 8 kJ/m² (trocken, 23 °C) | |
| Polyamid (A4) (Vergleich) | Amorphes Polyamid MACMI/MACMT/12 aus Bis(3-methyl-4-amino-cyclohexyl)methan (38,0 Mol-%, Isophthalsäure (19,0 Mol-%), Terephthalsäure (19,0 Mol-%) und Laurinlactam (24,0 Mol-%) | EMS-CHEMIE AG (Schweiz) |
| | RV*: 1,54 | |
| | Glasübergangstemperatur: 194 °C | |
| | Zug-E-Modul: 2200 MPa (trocken, 23 °C) | |
| | Kerbschlagzähigkeit, Charpy: 10 kJ/m² (trocken, 23 °C) | |
| Polyamid (A5) (Vergleich) | Amorphes Polyamid | EMS-CHEMIE AG (Schweiz) |
| | 612/6I/6T/MACM12/MACMI/MACMT aus 1,6-Hexandiamin (31,5 Mol-%), Bis(3-methyl-4-aminocyclohexyl)methan (18,5 Mol-%), Isophthalsäure (15,5 Mol-%), Terephthalsäure (15,5 Mol-%) und 1,12-Dodecandisäure (19,0 Mol-%) | |
| | RV*: 1,74 | |
| | Glasübergangstemperatur: 145 °C | |
| | Zug-E-Modul: 2300 MPa (trocken, 23 °C) | |
| | Kerbschlagzähigkeit, Charpy: 11kJ/m² (trocken, 23 °C) | |

| | | |
|---|---|---|
| **: gemessen an einer Lösung von 0,5 g Polyamid in 100 ml m-Kresol bei 20 °C*. | | |

**Tabelle 2: In den Beispielen und Vergleichsbeispielen verwendete Schlagzähmodifikatoren (B1) bis (B7).**

| | | |
|---|---|---|
| Schlagzähmodifikator (B1) (erfindungsgemäß) | Blend aus Ethylen/Propylen-Copolymer (20 Mol-% Propylen) und Ethylen/Buten-1-Copolymer (15 Mol-% Buten-1) im Gewichtsverhältnis 67 : 33 funktionalisiert via Pfropfung mit 0,6 Gew.-% Maleinsäureanhydrid | Mitsui Chemicals, Japan |
| | MVR** 1,3 cm³/10min bei 230 °C und 2,16 kg | |
| | Handelsname: Tafmer MC201 | |
| Schlagzähmodifikator (B2) | Funktionalisiertes Copolymer aus Ethylen und 1-Octen | Du Pont de Nemours (Deutschland) GmbH, |
| (Vergleich) | funktionalisiert mit 0,5 Gew.-% | Deutschland |
| | Maleinsäureanhydrid | |
| | Handelsname: Fusabond N MN493D | |
| Schlagzähmodifikator (B3) | Funktionalisiertes Copolymer aus Ethylen und But 1 en | Mitsui Chemical, Japan |
| (Vergleich) | 1,0 Gew.-% Maleinsäureanhydrid | |
| | Handelsname: Tafmer MH7020 | |
| Schlagzähmodifikator (B4) | Copolymer aus Ethylen und Glycidylmethacrylat mit 8 Gew.-% Glycidylmethacrylat | Arkema GmbH, Deutschland |
| (Vergleich) | Handelsname: Lotader AX 8840 | |
| Schlagzähmodifikator (B5) | Funktionalisiertes Styrol-Ethylen/Buten-l-Styrol-Blockcopolymer | Kraton Polymers LLC, USA |
| (Vergleich) | mit 30 Gew-% Styrol | |
| | 1,7 Gew.-% Maleinsäureanhydrid | |
| | Handelsname: Kraton FG1901 GT | |
| Schlagzähmodifikator (B6) (Vergleich) | Styrol-Isobuten-Styrol-Blockcopolymer Handelsname Sibstar 102 T | Kaneka Belgium NV, Belgien |
| Schlagzähmodifikator (B7) | Funktionalisiertes Copolymer aus Ethylen und Propen, gepfropft | Rohm und Haas, USA |
| (Vergleich) | mit Maleinsäureanhydrid | |
| | Handelsname Paraloid EXL 3808 | |

| | | |
|---|---|---|
| ***: Schmelze-Volumenrate (Melt Volume Rate).* | | |

### 3 Beispiele und Vergleichsbeispiele

### 3.1 Allgemeine Herstellungsvorschrift für die Copolyamide (A)

Die Herstellung der Copolyamide (A) erfolgt auf an sich bekannte Weise in bekannten, rührbaren Druckautoklaven mit einem Vorlagegefäß und einem Reaktionsgefäß.

Im Vorlagegefäß wird deionisiertes Wasser vorgelegt und die Monomere und etwaige Zusatzstoffe zugegeben. Danach wird mehrfach mit Stickstoffgas inertisiert. Unter Rühren wird auf 180 bis 230 °C unter dem sich einstellenden Druck aufgeheizt, um eine homogene Lösung zu erhalten. Diese Lösung wird durch ein Sieb in das Reaktionsgefäß gepumpt und dort auf die gewünschte Reaktionstemperatur von 270 bis 310 °C bei einem Druck von maximal 30 bar aufgeheizt. Der Ansatz wird in der Druckphase für 2 bis 4 Stunden auf der Reaktionstemperatur gehalten. In der anschließenden Entspannungsphase wird der Druck innerhalb von 1 bis 2,5 Stunden auf atmosphärischen Druck reduziert, wobei die Temperatur leicht sinken kann. In der folgenden Entgasungsphase wird der Ansatz bei atmosphärischem Druck für 1 bis 2,5 Stunden auf einer Temperatur von 270 bis 310 °C gehalten. Die Polymerschmelze wird in Strangform ausgetragen, im Wasserbad bei 15 bis 80 °C abgekühlt und granuliert. Das Granulat wird bei 80 bis 120 °C unter Stickstoff oder im Vakuum auf einen Wassergehalt von weniger als 0,1 Gew.-% getrocknet.

Geeignete Katalysatoren zur Beschleunigung der Polykondensationsreaktion sind phosphorhaltige Säuren wie beispielsweise H₃PO₂, H₃PO₃, H₃PO₄, deren Salze oder organischen Derivate. Die Katalysatoren werden im Bereich von 0,01 bis 0,5 Gew.-%, bevorzugt 0,03 bis 0,1 Gew.-%, bezogen auf das Copolyamid, zugegeben.

Geeignete Entschäumer zur Vermeidung der Schaumbildung während der Entgasung sind wässrige, 10 %-ige Emulsionen, die Silicone oder Siliconderivate enthalten und in Mengen von 0,01 bis 1,0 Gew.-%, bevorzugt 0,01 bis 0,10 Gew.-%, bezogen auf das Copolyamid, eingesetzt werden.

Die Einstellung der relativen Viskosität und damit der Molmasse kann in an sich bekannter Weise, z.B. über monofunktionelle Amine oder Carbonsäuren, und/oder difunktionelle Diamine oder Dicarbonsäuren als Kettenregler erfolgen. Die Kettenregler können einzeln oder in Kombination verwendet werden. Die übliche Einsatzmenge der monofunktionellen Kettenregler liegt bei 10 bis 200 mmol pro kg Copolyamid.

### 3.2 Allgemeine Herstellungs- und Verarbeitungsvorschrift für die Polyamid-Formmassen

Zur Herstellung der erfindungsgemäßen Polyamid-Formmasse werden die Komponenten A), B) und gegebenenfalls C) auf üblichen Compoundiermaschinen, wie z.B. ein- oder zweiwelligen Extrudern oder Schneckenknetern gemischt. Die Komponenten werden dabei einzelnen über gravimetrische Dosierwaagen in den Einzug oder jeweils in einen Sidefeeder dosiert oder in Form eines Dryblends zugeführt.

Werden Zusatzstoffe (Komponente C)) verwendet, können diese direkt oder in Form eines Masterbatches eingebracht werden. Bei dem Trägermaterial des Masterbatches handelt es sich bevorzugt um ein Polyamid oder ein Polyolefin. Unter den Polyamiden eignen sich dazu besonders das Polyamid der jeweiligen Komponenten A.

Zur Dryblend-Herstellung werden die getrockneten Granulat der Komponenten A), B) und gegebenenfalls C) in einem geschlossenen Behälter vermischt. Diese Mischung wird mittels eines Taumelmischers, Rhönradmischers oder Taumeltrockners 10 bis 40 Minuten lang homogenisiert. Zur Vermeidung der Feuchtigkeitsaufnahme kann dies unter getrocknetem Schutzgas erfolgen.

Die Compoundierung erfolgt bei eingestellten Zylindertemperaturen von 250 bis 310 °C, wobei die Temperatur des ersten Zylinders unter 110 °C eingestellt werden kann. Vor der Düse kann entgast werden. Dies kann mittels Vakuum oder atmosphärisch erfolgen. Die Schmelze wird in Strangform ausgetragen, im Wasserbad bei 10 bis 80 °C abgekühlt und anschließend granuliert. Das Granulat wird bei 80 bis 120 °C unter Stickstoff oder im Vakuum auf einen Wassergehalt von unter 0,1 Gew.-% getrocknet.

Die Verarbeitung der erfindungsgemäßen Polyamid-Formmassen im Spritzguss erfolgt bei aufsteigenden Zylindertemperaturen von 260 bis 310 °C, wobei ein vom Einzug zur Düse hin auf- und absteigendes Temperaturprofil verwendet werden kann. Die Werkzeugtemperatur wird auf eine Temperatur von 60 bis 140 °C, bevorzugt 70 bis 120 °C eingestellt.

### 3.3 Herstellung der Polyamid-Formmasse gemäß Beispiel 1

Die getrockneten Granulate (A) und (B) wurden zu einem Dryblend vermischt, und zwar in dem in der Tabelle 3 angegebenen Verhältnis. Diese Mischung wurde mittels eines Taumelmischers ca. 20 Minuten lang homogenisiert.

Die Polyamid-Formmasse wurde auf einem Zweiwellenextruder der Firma Werner & Pfleiderer Typ ZSK 25 hergestellt. Das Dryblend wurde dabei über eine Dosierwaage in den Einzug dosiert.

Die Temperatur des ersten Gehäuses wurde auf 100 °C eingestellt, diejenige der restlichen Gehäuse auf 260 bis 290 °C. Es wurde eine Drehzahl von 150 U/min und ein Durchsatz von 10 kg/h verwendet und nicht entgast. Der Schmelzestrang wurde im Wasserbad abgekühlt, geschnitten und das erhaltene Granulat bei 100 °C für 24 h im Vakuum (30 mbar) auf einen Wassergehalt von unter 0,1 Gew.-% getrocknet.

### 3.4 Beispiele und Vergleichsbeispiele

In den folgenden Tabellen 3 und 4 werden die Resultate der Beispiele und Vergleichsbeispiele gemäß vorliegender Erfindung zusammengefasst.

**Tabelle 3: Beispiele und Vergleichsbeispiele.**

| | | **Beispiele** | | | **Vergleichsbeispiele** | | | | | |
|---|---|---|---|---|---|---|---|---|---|---|
| **Komponenten** | **Einheit** | **1** | **2** | **3** | **4** | **5** | **6** | **7** | **8** | **9** |
| Polyamid (A1) | Gew.-% | 95 | 92,5 | - | 97,5 | 90 | 97,5 | 95 | 92,5 | 90 |
| Polyamid (A2) | Gew.-% | - | - | 95 | - | - | - | - | - | - |
| Schlagzähmodifikator (B1) | Gew.-% | 5 | 7,5 | 5,0 | 2,5 | 10 | - | - | - | - |
| Schlagzähmodifikator (B2) | Gew.-% | - | - | - | - | - | 2,5 | 5 | 7,5 | 10 |

| **Tests** | | | | | | | | | | |
|---|---|---|---|---|---|---|---|---|---|---|
| Zug-E-Modul | MPa | 2400 | 2300 | 2400 | 2600 | 2200 | 2600 | 2500 | 2300 | 2300 |
| Kerbschlagzähigkeit, Charpy 23 °C | kJ/m² | 85 | 93 | 82 | 21 | 93 | 22 | 86 | 95 | 96 |
| Glanz 60° | % | 98 | 94 | 95 | 100 | 93 | 100 | 88 | 84 | 76 |
| Glanz 60° nach Waschen | % | 87 | 83 | 86 | 97 | 65 | 95 | 69 | 53 | 13 |

**Tabelle 4: Vergleichsbeispiele.**

| | | **Vergleichsbeispiele** | | | | | | | |
|---|---|---|---|---|---|---|---|---|---|
| **Komponenten** | **Einheit** | **10** | **11** | **12** | **13** | **14** | **15** | **16** | **17** |
| Polyamid (A1) | Gew.-% | - | - | - | 92,5 | 92,5 | 92,5 | 92,5 | 92,5 |
| Polyamid (A3) | Gew.-% | 95 | - | - | - | - | - | - | - |
| Polyamid (A4) | Gew.-% | - | 95 | - | - | - | - | - | - |
| Polyamid (A5) | Gew.-% | - | - | 92,5 | - | - | - | - | - |
| Schlagzähmodifikator (B1) | Gew.-% | 5 | 5 | 7,5 | - | - | - | - | - |
| Schlagzähmodifikator (B3) | Gew.-% | - | - | - | 7,5 | - | - | - | - |
| Schlagzähmodifikator (B4) | Gew.-% | - | - | - | - | 7,5 | - | - | - |
| Schlagzähmodifikator (B5) | Gew.-% | - | - | - | - | - | 7,5 | - | - |
| Schlagzähmodifikator (B6) | Gew.-% | - | - | - | - | - | - | 7,5 | - |
| Schlagzähmodifikator (B7) | Gew.-% | - | - | - | - | - | - | - | 7,5 |

| **Tests** | | | | | | | | | |
|---|---|---|---|---|---|---|---|---|---|
| Zug-E-Modul | MPa | 2600 | 1900 | 1900 | 2100 | 2300 | 2300 | 2400 | 2000 |
| Kerbschlagzähigkeit, Charpy 23 °C | kJ/m² | 17 | 21 | 74 | 79 | 65 | 80 | 16 | 81 |
| Glanz 60° | % | 95 | 98 | 88 | 82 | 84 | 74 | 100 | 88 |
| Glanz 60° nach Waschen | % | 41 | 53 | 46 | 11 | 21 | 14 | 98 | 11 |

### 4 Diskussion der Ergebnisse

Die Polyamid-Formmassen gemäß der Beispiele 1 bis 3 bestehen aus einem erfindungsgemäßen Copolyamid sowie 5 bzw. 7,5 Gew.-% eines erfindungsgemäßen Schlagzähmodifikators. Formkörper aus diesen Polyamid-Formmassen weisen nach dem Waschtest sehr hohe Werte für den Glanz bei 60 ° auf und die Kerbschlagzähigkeit ist ebenfalls sehr hoch.

Die Polyamid-Formmassen gemäß der Vergleichsbeispiele VB4 und VB5 unterscheiden sich von denen gemäß der erfindungsgemäßen Beispiele darin, dass ein tieferer bzw. höher Anteil des gleichen Schlagzähmodifikators verwendet wurde. Für einen tieferen Anteil des Schlagzähmodifikator wird ein deutlicher Abfall der Kerbschlagzähigkeit beobachtet, wohingegen für einen höheren Anteil des Schlagzähmodifikators ein signifikant schlechterer Glanz nach dem Waschtest beobachtet wird.

In den Vergleichsbeispielen VB6 bis VB9 wurde 2,5 bis 10 Gew.-% eines nicht erfindungsgemäßen Schlagzähmodifikators verwendet. Für keine der entsprechenden Polyamid-Formmassen wurde ein guter Glanz nach dem Waschtest und gute Werte für die Kerbschlagzähigkeit beobachtet. Bemerkenswert ist, dass auch mit dem erfindungsgemäßen Anteil an Schlagzähmodifikator, der in den Vergleichsbeispielen VB7 und VB8 zum Einsatz kam, eine deutliche Verschlechterung des Glanzes nach dem Waschtest beobachtet wird.

Die Polyamid-Formmassen gemäß der Vergleichsbeispiele VB10 bis VB12 enthalten einen erfindungsgemäßen Schlagzähmodifikator in den anspruchsgemäßen Mengen. Diese Polyamid-Formmassen enthalten aber ein nicht erfindungsgemäßes Copolyamid. Der Glanz nach dem Waschtest und die Kerbschlagzähigkeit gemäß diesen Vergleichsbeispielen sind deutlich schlechter als für die erfindungsgemäßen Beispiele B1 bis B3.

In den Vergleichsbeispielen VB13 bis VB17 wurden nicht erfindungsgemäße Schlagzähmodifikatoren und das erfindungsgemäße Polyamid (A1) verwendet. Für keines dieser Vergleichsbeispiele wurde die angestrebte Kombination an Eigenschaften, guter Glanz nach dem Waschtest und gute Kerbschlagzähigkeit, beobachtet.

Die Polyamid-Formmassen gemäß der Vergleichsbeispiele VB11, VB12 und VB17 zeigen außerdem noch einen zu geringen Zug-E-Modul.

Überraschenderweise gelingt es nur durch die Kombination von Merkmalen gemäß Anspruch 1, sowohl einen guten Glanz bei 60° nach dem Waschen als auch eine gute Kerbschlagzähigkeit zu erhalten.

## Patentansprüche

1. Polyamid-Formmasse enthaltend die folgenden Komponenten oder bestehend aus diesen Komponenten:
(A) 84,5 bis 97,0 Gew.-% mindestens eines amorphen oder mikrokristallinen Copolyamids ausgewählt aus der Gruppe bestehend aus PA 61/6T/MACMI/MACMT/PACMI/PACMT/Y, PA 6I/6T/MACMI/MACMT/Y und Mischungen daraus; wobei das Monomer Y 7 bis 14 Kohlenstoffatome besitzt und ausgewählt ist aus der Gruppe bestehend aus Lactamen, ω-Aminosäuren und Mischungen hiervon;
(B) 3,0 bis 9,5 Gew.-% mindestens eines funktionalisierten Schlagzähmodifikators, bestehend aus den Monomeren
Ba) Ethylen;
Bb) Propylen; und
Bc) 1-Buten;
wobei die Funktionalisierung durch Copolymerisation und/
oder durch Pfropfung mit einer Verbindung ausgewählt aus der Gruppe bestehend aus ungesättigten Carbonsäuren, ungesättigten Carbonsäurederivaten, ungesättigten Glycidylverbindungen und Mischungen daraus erfolgt;
(C) 0 bis 6 Gew.-% mindestens eines Zusatzstoffes;
wobei sich die Gewichtsanteile der Komponenten (A) bis (C) auf 100 Gew.-% ergänzen.

2. Polyamid-Formmasse nach Anspruch 1, **dadurch gekennzeichnet, dass**
Komponente (A) aus den Monomeren,
a1) 4 bis 30 Mol-% Bis(3-methyl-4-amino-cyclohexyl)methan;
a2) 18 bis 45 Mol-% 1,6 Hexandiamin;
a3) 0 bis 10 Mol-% Bis(4-amino-cyclohexyl)methan;
a4) 18 bis 30 Mol-% Isophthalsäure;
a5) 18 bis 30 Mol-% Terephthalsäure; und
a6) 0,1 bis 10 Mol-% Monomer Y, wobei das Monomer Y 7 bis 14 Kohlenstoffatome besitzt und ausgewählt ist aus der Gruppe bestehend aus Lactamen, ω-Aminosäuren und Mischungen hiervon;
aufgebaut ist;
wobei sich die Anteile der Monomere a1) bis a6) im Copolyamid auf 100 Mol-% ergänzen und
wobei die Summe aller Diamin-Monomere im Wesentlichen der Summe aller Dicarbonsäure-Monomere entspricht.

3. Polyamid-Formmasse nach einem der Ansprüche 1 oder 2, **dadurch gekennzeichnet, dass**
Komponente (A) ein amorphes Copolyamid PA 61/6T/MACMI/MACMT/PACMI/PACMT/Y ist, welches aus den Monomeren,
a1) 4 bis 30 Mol-% Bis(3-methyl-4-amino-cyclohexyl)methan;
a2) 18 bis 45 Mol-% 1,6 Hexandiamin;
a3) 0,1 bis 10 Mol-% Bis(4-amino-cyclohexyl)methan;
a4) 18 bis 30 Mol-% Isophthalsäure;
a5) 18 bis 30 Mol-% Terephthalsäure; und
a6) 0,1 bis 10 Mol-% Monomer Y, wobei das Monomer Y 7 bis 14 Kohlenstoffatome besitzt und ausgewählt ist aus der Gruppe bestehend aus Lactamen, ω-Aminosäuren und Mischungen hiervon;
aufgebaut ist;
wobei sich die Anteile der Monomere a1) bis a6) im Copolyamid auf 100 Mol-% ergänzen und
wobei die Summe aller Diamin-Monomere im Wesentlichen der Summe aller Dicarbonsäure-Monomere entspricht.

4. Polyamid-Formmasse gemäß Anspruch 3, **dadurch gekennzeichnet, dass**
Komponente (A) aus den Monomeren,
a1) 5 bis 20 Mol-%, bevorzugt 5,5 bis 15 Mol-% und besonders bevorzugt 6,5 bis 10 Mol-% Bis(3-methyl-4-aminocyclohexyl)methan;
a2) 20 bis 43 Mol-%, bevorzugt 25,5 bis 41 Mol-% und besonders bevorzugt 34 bis 40 Mol-% 1,6 Hexandiamin;
a3) 0,1 bis 8 Mol-%, bevorzugt 0,5 bis 7 Mol-% und besonders bevorzugt 2 bis 4 Mol-% Bis(4-amino-cyclohexyl)methan;
a4) 20 bis 29,5 Mol-%, bevorzugt 22 bis 27 Mol-% und besonders bevorzugt 23 bis 25,75 Mol-% Isophthalsäure;
a5) 20 bis 29,5 Mol-%, bevorzugt 22 bis 27 Mol-% und besonders bevorzugt 23 bis 25,75 Mol-% Terephthalsäure; und
a6) 1 bis 8 Mol-%, bevorzugt 2 bis 5 Mol-% und besonders bevorzugt 2,5 bis 4 Mol-% Monomer Y, wobei das Monomer Y 7 bis 14 Kohlenstoffatome besitzt und ausgewählt ist aus der Gruppe bestehend aus Lactamen, ω-Aminosäuren und Mischungen hiervon;
aufgebaut ist;
wobei sich die Anteile der Monomere a1) bis a6) im Copolyamid auf 100 Mol-% ergänzen und
wobei die Summe aller Diamin-Monomere im Wesentlichen der Summe aller Dicarbonsäure-Monomere entspricht.

5. Polyamid-Formmasse gemäß einem der Ansprüche 1 oder 2, **dadurch gekennzeichnet, dass**
Komponente (A) ein amorphes Copolyamid PA 6I/6T/MACMI/MACMT/Y ist, welches aus den Monomeren,
a1) 4 bis 30 Mol-% Bis(3-methyl-4-amino-cyclohexyl)methan;
a2) 18 bis 45 Mol-% 1,6 Hexandiamin;
a4) 18 bis 30 Mol-% Isophthalsäure;
a5) 18 bis 30 Mol-% Terephthalsäure; und
a6) 0,1 bis 10 Mol-% Monomer Y, wobei das Monomer Y 7 bis 14 Kohlenstoffatome besitzt und ausgewählt ist aus der Gruppe bestehend aus Lactamen, ω-Aminosäuren und Mischungen hiervon;
aufgebaut ist;
wobei sich die Anteile der Monomere a1), a2) und a4 bis a6) im Copolyamid auf 100 Mol-% ergänzen und
wobei die Summe aller Diamin-Monomere im Wesentlichen der Summe aller Dicarbonsäure-Monomere entspricht.

6. Polyamid-Formmasse gemäß Anspruch 5, **dadurch gekennzeichnet, dass**
Komponente (A) aus den Monomeren,
a1) 5 bis 20 Mol-%, bevorzugt 5,5 bis 15 Mol-% und besonders bevorzugt 6,5 bis 12 Mol-% Bis(3-methyl-4-aminocyclohexyl)methan;
a2) 26 bis 43 Mol-%, bevorzugt 32,5 bis 42 Mol-% und besonders bevorzugt 36 bis 41,5 Mol-% 1,6 Hexandiamin;
a4) 20 bis 29,5 Mol-%, bevorzugt 22 bis 27 Mol-% und besonders bevorzugt 23 bis 25,75 Mol-% Isophthalsäure;
a5) 20 bis 29,5 Mol-%, bevorzugt 22 bis 27 Mol-% und besonders bevorzugt 23 bis 25,75 Mol-% Terephthalsäure; und
a6) 1 bis 8 Mol-%, bevorzugt 2 bis 5 Mol-% und besonders bevorzugt 2,5 bis 4 Mol-% Monomer Y, wobei das Monomer Y 7 bis 14 Kohlenstoffatome besitzt und ausgewählt ist aus der Gruppe bestehend aus Lactamen, ω-Aminosäuren und Mischungen hiervon;
aufgebaut ist;
wobei sich die Anteile der Monomere a1), a2) und a4) bis a6) im Copolyamid auf 100 Mol-% ergänzen und
wobei die Summe aller Diamin-Monomere im Wesentlichen der Summe aller Dicarbonsäure-Monomere entspricht.

7. Polyamid-Formmasse gemäß einem der vorhergehenden Ansprüche, **dadurch gekennzeichnet, dass**
das Monomer Y der Komponente (A) ausgewählt ist aus der Gruppe bestehend aus Lactamen und ω-Aminosäuren, bevorzugt bestehend aus Önanthlactam (7 Kohlenstoffatome), Capryllactam (8 Kohlenstoffatome), Caprinlactam (10 Kohlenstoffatome), Lactam 11 (11 Kohlenstoffatome), Laurinlactam (12 Kohlenstoffatome), 1,7-Aminoheptansäure, 1,8-Aminooctansäure, 1,11-Aminoundecansäure und 1,12-Aminododecansäure und Mischungen hiervon,
besonders bevorzugt bestehend aus Lactam 11 (11 Kohlenstoffatome), Laurinlactam (12 Kohlenstoffatome), 1,11-Aminoundecansäure und 1,12-Aminododecansäure und Mischungen hiervon,
ganz besonders bevorzugt bestehend aus Laurinlactam (12 Kohlenstoffatome) und 1,12-Aminododecansäure und Mischungen hiervon,
am bevorzugtesten ist Laurinlactam (12 Kohlenstoffatome).

8. Polyamid-Formmasse gemäß einem der vorhergehenden Ansprüche, **dadurch gekennzeichnet, dass**
der Anteil von Komponente (A) in der Polyamid-Formmasse im Bereich von 87,5 bis 96,5 Gew.-%, bevorzugt von 89 bis 96 Gew.-% und besonders bevorzugt von 90,5 bis 94,99 Gew.-%, bezogen auf die Summe der Komponenten (A) bis (C), liegt; und/oder
der Anteil von Komponente (B) in der Polyamid-Formmasse im Bereich von 3,5 bis 8,5 Gew.-%, bevorzugt von 4,0 bis 8,0 Gew.-% und besonders bevorzugt von 5,0 bis 7,5 Gew.%, bezogen auf die Summe der Komponenten (A) bis (C), liegt; und/oder
der Anteil von Komponente (C) in der Polyamid-Formmasse im Bereich von 0 bis 4 Gew.-%, bevorzugt von 0 bis 3 Gew.-% und besonders bevorzugt von 0,01 bis 2 Gew.%, bezogen auf die Summe der Komponenten (A) bis (C), liegt.

9. Polyamid-Formmasse gemäß einem der vorhergehenden Ansprüche, **dadurch gekennzeichnet, dass**
die Funktionalisierung von Komponente (B) durch Copolymerisation erfolgte und der Anteil der zur Funktionalisierung verwendeten Verbindung 3 bis 25 Gew.%, bevorzugt 4 bis 20 Gew.-% und besonders bevorzugt 4,5 bis 15 Gew.-%, bezogen auf die Gesamtmasse von Komponente (B), beträgt; und/oder
die Funktionalisierung von Komponente (B) durch Pfropfung erfolgte und der Anteil der zur Funktionalisierung verwendeten Verbindung 0,3 bis 2,5 Gew.%, bevorzugt 0,4 bis 2,0 Gew.-% und besonders bevorzugt 0,5 bis 1,9 Gew.-%, bezogen auf die Gesamtmasse von Komponente (B), beträgt.

10. Polyamid-Formmasse gemäß einem der vorhergehenden Ansprüche, **dadurch gekennzeichnet, dass**
die zur Funktionalisierung von Komponente (B) verwendete Verbindung ausgewählt ist aus der Gruppe bestehend aus Acrylsäure, Methacrylsäure, Glycidylacrylsäure, Glycidylmethacrylsäure, Acrylsäureestern, Methacrylsäureestern, α-Ethylacrylsäure, Maleinsäure, Maleinsäureanhydrid, Fumarsäure, Itaconsäure, Itaconsäureanhydrid, Citraconsäure, Aconitsäure, Tetrahydrophthalsäure, Butenylsuccinsäure und Mischungen hiervon, wobei Maleinsäure, Maleinsäureanhydrid, Fumarsäure, Itaconsäure, Itaconsäureanhydrid, Aconitsäure und Mischungen hiervon bevorzugt sind, besonders bevorzugt ist Maleinsäureanhydrid.

11. Polyamid-Formmasse gemäß einem der vorhergehenden Ansprüche, **dadurch gekennzeichnet, dass**
die Monomere Ba), Bb) und Bc) in Komponente (B) in den folgenden molaren Anteilen enthalten sind:
Ba) 65 bis 90 Mol-%, bevorzugt 65 bis 87 Mol-% und besonders bevorzugt 71 bis 84 Mol-%;
Bb) 8 bis 33 Mol-%, bevorzugt 10 bis 25 Mol-% und besonders bevorzugt 12 bis 20 Mol-%;
Bc) 2 bis 25 Mol-%, bevorzugt 3 bis 20 Mol-% und besonders bevorzugt 4 bis 9 Mol-%;
wobei sich die molaren Anteile der Monomere Ba), Bb) und Bc) auf 100 Mol-% ergänzen.

12. Polyamid-Formmasse gemäß einem der vorhergehenden Ansprüche, **dadurch gekennzeichnet, dass**
der mindestens eine Zusatzstoff (C) ausgewählt ist aus der Gruppe bestehend aus anorganischen Stabilisatoren, organischen Stabilisatoren, insbesondere Antioxidantien, Antiozonantien und/oder Lichtschutzmitteln, Gleitmitteln, Farbstoffen, Markierungsmitteln, anorganischen Pigmenten, organischen Pigmenten, Entformungsmitteln, kettenverlängernden Additiven, Antiblockmitteln, optischen Aufhellern und Mischungen davon.

13. Polyamid-Formmasse gemäß einem der vorhergehenden Ansprüche, **dadurch gekennzeichnet, dass**
der nach DIN EN ISO 2813 (2015) bei 23°C an Platten mit den Dimensionen 60 x 60 x 2 mm bestimmte Glanz 60° nach Behandlung des Prüfkörpers mit einer Seifenlösung für 30±2 min bei 63±2°C mindestens 75 % und bevorzugt mindestens 80 % beträgt; und/oder
die nach DIN EN ISO 179/2 eA (2000) bestimmte Kerbschlagzähigkeit mindestens 70 kJ/m², bevorzugt mindestens 75 kJ/m² und besonders bevorzugt mindestens 80 kJ/m² beträgt; und/oder
der nach DIN EN ISO 527 (1997) bestimmte Zug-E-Modul mindestens 2100 MPa, bevorzugt mindestens 2200 MPa und besonders bevorzugt mindestens 2300 MPa beträgt; und/oder
der nach DIN EN ISO 2813 (2015) bestimmte Glanz 60° mindestens 80 %, bevorzugt mindestens 85 % und besonders bevorzugt mindestens 90 % beträgt.

14. Formkörper enthaltend eine Polyamid-Formmasse nach einem der Ansprüche 1 bis 13 oder bestehend aus dieser Polyamid-Formmasse.

15. Formkörper nach Anspruch 14, **dadurch gekennzeichnet, dass**
der Formkörper ausgewählt ist aus der Gruppe bestehend aus Dekorelementen, insbesondere im Automobilinnenraum oder Modebereich, Sportartikeln, insbesondere Skischuhen, Zwischensohlen für Sportschuhe, Freizeitartikeln, Spielzeug, insbesondere Konstruktionselementen, Bausteinen, Figuren oder Modellen, Haushaltsartikeln, insbesondere Schüsseln, Dosen oder Becher, Bauteilen von Brillen, Möbelbeschläge, Einlegesohlen, Bau- und Sichtteile für Geräte im Sanitär-, Hygienebereich und Kosmetikbereich, Teile von Sicherheitsschuhen, insbesondere Kappen, Gehäuse und Gehäuseteile für Elektro- und Elektronikgeräte, Schutzhüllen für Mobiltelefone, Sichtteilen im Computer und Telekommunikationsbereich, Rohren, Schläuchen und Bauteilen von E-Zigaretten.

## Claims

1. A polyamide molding compound comprising the following components or consisting of these components:
(A) 84.5 to 97.0 wt% of at least one amorphous or microcrystalline copolyamide selected from the group consisting of PA 6I/6T/MACMI/MACMT/PACMI/PACMT/Y, PA 6I/6T/MACMI/MACMT/Y, and mixtures thereof, wherein the monomer Y has 7 to 14 carbon atoms and is selected from the group consisting of lactams, ω-amino acids, and mixtures hereof;
(B) 3.0 to 9.5 wt% of at least one functionalized impact resistance modifier comprising the monomers
Ba) ethylene;
Bb) propylene; and
Bc) 1-butene,
wherein the functionalization takes place by copolyermization and/or by grafting with a compound selected from the group consisting of unsaturated carboxylic acids, unsaturated carboxylic acid derivatives, unsaturated glycidyl compounds, and mixtures thereof;
(C) 0 to 6 wt% of at least one additive;
wherein the weight proportions of the components (A) to (C) add up to 100 wt%.

2. A polyamide molding compound in accordance with claim 1, **characterized in that**
component (A) is made up of the monomers
a1) 4 to 30 mol% bis(3-methyl-4-aminocyclohexyl)methane;
a2) 18 to 45 mol% 1,6-hexanediamine;
a3) 0 to 10 mol% bis(4-aminocyclohexyl)methane;
a4) 18 to 30 mol% isophthalic acid;
a5) 18 to 30 mol% terepththalic acid; and
a6) 0.1 to 10 mol% of monomer Y, wherein the monomer Y has 7 to 14 carbon atoms and is selected from the group consisting of lactams, ω-amino acids, and mixtures hereof;
wherein the proportions of the monomers a1) to a6) in the copolyamide add up to 100%; and
wherein the sum of all the diamine monomers substantially corresponds to the sum of all the dicarboxylic acid monomers.

3. A polyamide molding compound in accordance with one of the claims 1 or 2, **characterized in that**
component (A) is an amorphous copolyamide PA 6I/6T/MACMI/MACMT/PACMI/PACMT/Y which is made up of the monomers
a1) 4 to 30 mol% bis(3-methyl-4-aminocyclohexyl)methane;
a2) 18 to 45 mol% 1,6-hexanediamine;
a3) 0.1 to 10 mol% bis(4-aminocyclohexyl)methane;
a4) 18 to 30 mol% isophthalic acid;
a5) 18 to 30 mol% terepththalic acid; and
a6) 0.1 to 10 mol% of monomer Y, wherein the monomer Y has 7 to 14 carbon atoms and is selected from the group consisting of lactams, ω-amino acids, and mixtures hereof;
wherein the proportions of the monomers a1) to a6) in the copolyamide add up to 100%; and
wherein the sum of all the diamine monomers substantially corresponds to the sum of all the dicarboxylic acid monomers.

4. A polyamide molding compound in accordance with claim 3, **characterized in that**
component (A) is made up of the monomers
a1) 5 to 20 mol%, preferably 5.5 to 15 mol%, and particularly preferably 6.5 to 10 mol%, bis(3-methyl-4-aminocyclohexyl)methane;
a2) 20 to 43 mol%, preferably 25.5 to 41 mol%, and particularly preferably 34 to 40 mol%, 1,6-hexanediamine;
a3) 0.1 to 8 mol%, preferably 0.5 to 7 mol%, and particularly preferably 2 to 4 mol%, bis(4-aminocyclohexyl)methane;
a4) 20 to 29.5 mol%, preferably 22 to 27 mol%, and particularly preferably 23 to 25.75 mol%, isophthalic acid;
a5) 20 to 29.5 mol%, preferably 22 to 27 mol%, and particularly preferably 23 to 25.75 mol%, terepththalic acid; and
a6) 1 to 8 mol%, preferably 2 to 5 mol%, and particularly preferably 2.5 to 4 mol%, monomer Y, wherein the monomer Y has 7 to 14 carbon atoms and is selected from the group consisting of lactams, ω-amino acids, and mixtures hereof;
wherein the proportions of the monomers a1) to a6) in the copolyamide add up to 100%; and
wherein the sum of all the diamine monomers substantially corresponds to the sum of all the dicarboxylic acid monomers.

5. A polyamide molding compound in accordance with one of the claims 1 or 2, **characterized in that**
component (A) is an amorphous copolyamide PA 6I/6T/MACMI/MACMT/Y which is made up of the monomers
a1) 4 to 30 mol% bis(3-methyl-4-aminocyclohexyl)methane;
a2) 18 to 45 mol% 1,6-hexanediamine;
a4) 18 to 30 mol% isophthalic acid;
a5) 18 to 30 mol% terepththalic acid; and
a6) 0.1 to 10 mol% of monomer Y, wherein the monomer Y has 7 to 14 carbon atoms and is selected from the group consisting of lactams, ω-amino acids, and mixtures hereof;
wherein the proportions of the monomers a1), a2), and a4) to a6) in the copolyamide add up to 100%; and
wherein the sum of all the diamine monomers substantially corresponds to the sum of all the dicarboxylic acid monomers.

6. A polyamide molding compound in accordance with claim 5, **characterized in that**
component (A) is made up of the monomers
a1) 5 to 20 mol%, preferably 5.5 to 15 mol%, and particularly preferably 6.5 to 12 mol%, bis(3-methyl-4-aminocyclohexyl)methane;
a2) 26 to 43 mol%, preferably 32.5 to 42 mol%, and particularly preferably 36 to 41.5 mol%, 1,6-hexanediamine;
a4) 20 to 29.5 mol%, preferably 22 to 27 mol%, and particularly preferably 23 to 25.75 mol%, isophthalic acid;
a5) 20 to 29.5 mol%, preferably 22 to 27 mol%, and particularly preferably 23 to 25.75 mol%, terepththalic acid; and
a6) 1 to 8 mol%, preferably 2 to 5 mol%, and particularly preferably 2.5 to 4 mol, monomer Y, wherein the monomer Y has 7 to 14 carbon atoms and is selected from the group consisting of lactams, ω-amino acids, and mixtures hereof;
wherein the proportions of the monomers a1), a2), and a4) to a6) in the copolyamide add up to 100%; and
wherein the sum of all the diamine monomers substantially corresponds to the sum of all the dicarboxylic acid monomers.

7. A polyamide molding compound in accordance with one of the preceding claims, **characterized in that**
the monomer Y of the component (A) is selected from the group consisting of lactams and ω-amino acids, preferably comprising enantholactam (7 carbon atoms), caprylic lactam (8 carbon atoms), capric lactam (10 carbon atoms), lactam 11 (11 carbon atoms), lauric lactam (12 carbon atoms), 1,7-aminoheptanoic acid, 1,8-aminooctanoic acid, 1,11-aminoundecanoic acid, and 1,12-aminododecanoic acid, and mixtures thereof,
particularly preferably comprising lactam 11 (11 carbon atoms), lauric lactam (12 carbon atoms), 1,11 aminoundecanoic acid, and 1,12-aminododecanoic acid, and mixtures thereof,
very particularly preferably comprising lauric lactam (12 carbon atoms) and 1,12 aminododecanoic acid, and mixtures thereof,
lauric lactam (12 carbon atoms) is most preferred.

8. A polyamide molding compound in accordance with one of the preceding claims, **characterized in that**
the proportion of component (A) in the polyamide molding compound is in the range from 87.5 to 96.5 wt%, preferably from 89 to 96 wt%, and particularly preferably from 90.5 to 94.99 wt%, with respect to the sum of components (A) to (C); and/or
the proportion of component (B) in the polyamide molding compound is in the range from 3.5 to 8.5 wt%, preferably from 4.0 to 8.0 wt%, and particularly preferably from 5.0 to 7.5 wt%, with respect to the sum of components (A) to (C); and/or
the proportion of component (C) in the polyamide molding compound is in the range from 0 to 4 wt%, preferably from 0 to 3 wt%, and particularly preferably from 0.01 to 2 wt%, with respect to the sum of components (A) to (C).

9. A polyamide molding compound in accordance with one of the preceding claims, **characterized in that**
the functionalization of component (B) took place by copolymerization and the proportion of the compound used for the functionalization amounts to 3 to 25 wt%, preferably 4 to 20 wt%, and particularly preferably 4.5 to 15 wt%, with respect to the total mass of component (B); and/or
the functionalization of component (B) took place by grafting and the proportion of the compound used for the functionalization amounts to 0.3 to 2.5 wt%, preferably 0.4 to 2.0 wt%, and particularly preferably 0.5 to 1.9 wt%, with respect to the total mass of component (B).

10. A polyamide molding compound in accordance with one of the preceding claims, **characterized in that**
the compound used for the functionalization of component (B) is selected from the group consisting of acrylic acid, methacrylic acid, glycidyl acrylic acid, glycidyl methacrylic acid, acrylic acid esters, methacrylic acid esters, α-ethyl acrylic acid, maleic acid, maleic acid anhydride, fumaric acid, itaconic acid, itaconic acid anhydride, citraconic acid, aconitic acid, tetrhydrophthalic acid, butenyl succinic acid, and mixtures thereof, wherein maleic acid, maleic acid anhydride, fumaric acid, itaconic acid, itaconic acid anhydride, aconitic acid, and mixtures thereof are preferred; maleic acid anhydride is particularly preferred.

11. A polyamide molding compound in accordance with one of the preceding claims, **characterized in that**
the monomers Ba), Bb), and Bc) are included in component (B) in the following molar proportions:
Ba) 65 to 90 mol%, preferably 65 to 87 mol%, and particularly preferably 71 to 84 mol%;
Bb) 8 to 33 mol%, preferably 10 to 25 mol%, and particularly preferably 12 to 20 mol%;
Bc) 2 to 25 mol%, preferably 3 to 20 mol%, and particularly preferably 4 to 9 mol%,
wherein the molar proportions of the monomers Ba), Bb), and Bc) add up to 100 mol%.

12. A polyamide molding compound in accordance with one of the preceding claims, **characterized in that**
the at least one additive (C) is selected from the group consisting of inorganic stabilizers, organic stabilizers, in particular antioxidants, antioozonants and/or light protection means, lubricants, colorants, marking means, inorganic pigments, organic pigments, demolding means, chain-extending additives, anti-blocking means, optical brighteners, and mixtures thereof.

13. A polyamide molding compound in accordance with one of the preceding claims, **characterized in that**
the gloss 60° determined in accordance with DIN EN ISO 2813 (2015) at 23°C at plates having the dimension 60 x 60 x 2 mm amounts to at least 75% and preferably at least 80% after treatment of the test specimen with a soap solution for 30±2 min at 63±2°C; and/or
the notch impact resistance determined in accordance with DIN EN ISO 179/2 eA amounts to at least 70 kJ/m², preferably at least 75 kJ/m², and particularly preferably at least 80 kJ/m²; and/or
the modulus of elasticity determined in accordance with DIN EN ISO 527 (1997) amounts to at least 2100 MPa, preferably at least 2200 MPa, and particularly preferably at least 2300 MPa; and/or
the gloss 60° determined in accordance with DIN EN ISO 2813 (2015) amounts to at least 80%, preferably at least 85%, and particularly preferably at least 90%.

14. A molded body comprising a polyamide molding compound in accordance with one of the claims 1 to 13 or consisting of this polyamide molding compound.

15. A molded body in accordance with claim 14, **characterized in that**
the molded body is selected from the group consisting of trim elements, in particular in an automobile interior or in the fashion area, sports articles, in particular ski boots, midsoles for sports shoes, leisure articles, toys, in particular construction elements, modules, figures or models, domestic articles, in particular bowls, cans, or beakers, components of eyeglasses, furniture fittings, inserted soles, construction parts and visible parts for units in the sanitary area, hygiene area, and cosmetic area, parts of safety shoes, in particular caps, housings, and housing parts for electric devices and electronic devices, protective cases for cellular phones, visible parts in the area of computers and telecommunications, tubes, hoses, and components of E-cigarettes.

## Revendications

1. Mélange à mouler de polyamides contenant les composants suivants ou étant constitué de ces composants :
(A) 84,5 à 97,0 % en poids d'au moins un copolyamide amorphe ou microcristallin choisi dans le groupe consistant en PA 6I/6T/MACMI/MACMT/PACMI/PACMTN, PA 6I/6T/MACMI/MACMT/Y et les mélanges de ceux-ci ; le monomère Y possédant 7 à 14 atomes de carbone et étant choisi dans le groupe consistant en les lactames, les acides ω-aminés et les mélanges de ceux-ci ;
(B) 3,0 à 9,5 % en poids d'au moins un modificateur de résilience fonctionnalisé, consistant en les monomères
Ba) éthylène ;
Bb) propylène ; et
Bc) 1-butène ;
la copolymérisation étant réalisée par copolymérisation et/ou par greffage avec un composé choisi dans le groupe consistant en les acides dicarboxyliques insaturés, les dérivés d'acides carboxyliques insaturés, les composés glycidyliques insaturés et les mélanges de ceux-ci ;
(C) 0 à 6 % en poids d'au moins un additif,
la somme des proportions en poids des composants (A), (B) et (C) étant de 100 % en poids.

2. Mélange à mouler de polyamides selon la revendication 1, **caractérisé en ce que** le composant (A) est constitué des monomères
a1) 4 à 30 % en moles de bis(3-méthyl-4-amino-cyclohexyl)méthane ;
a2) 18 à 45 % en moles de 1,6-hexanediamine ;
a3) 0 à 10 % en moles de bis(4-amino-cyclohexyl)méthane ;
a4) 18 à 30 % en moles d'acide isophtalique ;
a5) 18 à 30 % en moles d'acide téréphtalique ; et
a6) 0,1 à 10 % en moles d'un monomère Y, le monomère Y possédant 7 à 14 atomes de carbone et étant choisi dans le groupe consistant en les lactames, les acides ω-aminés et les mélanges de ceux-ci ;
la somme des proportions des monomères a1) à a6) dans le copolyamide étant de 100 % en moles, et
la somme de toutes les diamines monomères correspondant pour l'essentiel à la somme de tous les acides dicarboxyliques monomères.

3. Mélange à mouler de polyamides selon l'une des revendications 1 ou 2, **caractérisé en ce que** le composant (A) est un copolyamide amorphe PA 6I/6T/MACMI/MACMT/PACMI/PACMT/Y, qui est constitué des monomères :
a1) 4 à 30 % en moles de bis(3-méthyl-4-amino-cyclohexyl)méthane ;
a2) 18 à 45 % en moles de 1,6-hexanediamine ;
a3) 0 à 10 % en moles de bis(4-amino-cyclohexyl)méthane ;
a4) 18 à 30 % en moles d'acide isophtalique ;
a5) 18 à 30 % en moles d'acide téréphtalique ; et
a6) 0,1 à 10 % en moles d'un monomère Y, le monomère Y possédant 7 à 14 atomes de carbone et étant choisi dans le groupe consistant en les lactames, les acides ω-aminés et les mélanges de ceux-ci ;
la somme des proportions des monomères a1) à a6) dans le copolyamide étant de 100 % en moles, et
la somme de toutes les diamines monomères correspondant pour l'essentiel à la somme de tous les acides dicarboxyliques monomères.

4. Mélange à mouler de polyamides selon la revendication 3, **caractérisé en ce que** le composant (A) est constitué des monomères
a1) 5 à 20 % en moles, de préférence 5,5 à 15 % en moles et d'une manière particulièrement préférée 6,5 à 10 % en moles de bis(3-méthyl-4-amino-cyclohexyl)méthane ;
a2) 20 à 43 % en moles, de préférence 25,5 à 41 % en moles et d'une manière particulièrement préférée 34 à 40 % en moles de 1,6-hexanediamine ;
a3) 0,1 à 8 % en moles, de préférence 0,5 à 7 % en moles et d'une manière particulièrement préférée 2 à 4 % en moles de bis(4-amino-cyclohexyl)méthane ;
a4) 20 à 29,5 % en moles, de préférence 22 à 27 % en moles et d'une manière particulièrement préférée 23 à 25,75 % en moles d'acide isophtalique ;
a5) 20 à 29,5 % en moles, de préférence 22 à 27 % en moles et d'une manière particulièrement préférée 23 à 25,75 % en moles d'acide téréphtalique ; et
a6) 1 à 8 % en moles, de préférence 2 à 5 % en moles et d'une manière particulièrement préférée 2,5 à 4 % en moles d'un monomère Y, le monomère Y possédant 7 à 14 atomes de carbone et étant choisi dans le groupe consistant en les lactames, les acides ω-aminés et les mélanges de ceux-ci ;
la somme des proportions des monomères a1) à a6) dans le copolyamide étant de 100 % en moles, et
la somme de toutes les diamines monomères correspondant pour l'essentiel à la somme de tous les acides dicarboxyliques monomères.

5. Mélange à mouler de polyamides selon l'une des revendications 1 ou 2, **caractérisé en ce que** le composant (A) est un copolyamide amorphe PA 6I/6T/MACMI/MACMT/Y, qui est constitué des monomères,
a1) 4 à 30 % en moles de bis(3-méthyl-4-amino-cyclohexyl)méthane ;
a2) 18 à 45 % en moles de 1,6-hexanediamine ;
a4) 18 à 30 % en moles d'acide isophtalique ;
a5) 18 à 30 % en moles d'acide téréphtalique ; et
a6) 0,1 à 10 % en moles d'un monomère Y, le monomère Y possédant 7 à 14 atomes de carbone et étant choisi dans le groupe consistant en les lactames, les acides ω-aminés et les mélanges de ceux-ci ;
la somme des proportions des monomères a1), a2) et a4) à a6) dans le copolyamide étant de 100 % en moles, et
la somme de toutes les diamines monomères correspondant pour l'essentiel à la somme de tous les acides dicarboxyliques monomères.

6. Mélange à mouler de polyamides selon la revendication 5, **caractérisé en ce que** le composant (A) est constitué des monomères
a1) 5 à 20 % en moles, de préférence 5,5 à 15 % en moles et d'une manière particulièrement préférée 6,5 à 12 % en moles de bis(3-méthyl-4-amino-cyclohexyl)méthane ;
a2) 26 à 43 % en moles, de préférence 32,5 à 42 % en moles et d'une manière particulièrement préférée 36 à 41,5 % en moles de 1,6-hexanediamine ;
a4) 20 à 29,5 % en moles, de préférence 22 à 27 % en moles et d'une manière particulièrement préférée 23 à 25,75 % en moles d'acide isophtalique ;
a5) 20 à 29,5 % en moles, de préférence 22 à 27 % en moles et d'une manière particulièrement préférée 23 à 25,75 % en moles d'acide téréphtalique ; et
a6) 1 à 8 % en moles, de préférence 2 à 5 % en moles et d'une manière particulièrement préférée 2,5 à 4 % en moles d'un monomère Y, le monomère Y possédant 7 à 14 atomes de carbone et étant choisi dans le groupe consistant en les lactames, les acides ω-aminés et les mélanges de ceux-ci ;
la somme des proportions des monomères a1), a2) et a4) à a6) dans le copolyamide étant de 100 % en moles, et
la somme de toutes les diamines monomères correspondant pour l'essentiel à la somme de tous les acides dicarboxyliques monomères.

7. Mélange à mouler de polyamides selon l'une des revendications précédentes, **caractérisé en ce que**
le monomère Y du composant (A) est choisi dans le groupe consistant en les lactames et les acides ω-aminés, de préférence consistant en l'oenantholactame (7 atomes de carbone), le capryllactame (8 atomes de carbone), le caprolactame (10 atomes de carbone), le lactame 11 (11 atomes de carbone), le laurolactame (12 atomes de carbone), l'acide 1,7-aminoheptanoïque, l'acide 1,8-aminooctanoïque, l'acide 1,11-aminoundécanoïque et l'acide 1,12-aminododécanoïque, et les mélanges de ceux-ci, d'une manière particulièrement préférée consistant en le lactame 11 (11 atomes de carbone), le laurolactame (12 atomes de carbone), l'acide 1,11-aminoundécanoïque et l'acide 1,12-aminododécanoïque et les mélanges de ceux-ci,
d'une manière tout particulièrement préférée consistant en le laurolactame (12 atomes de carbone) et l'acide 1,12-aminododécanoïque et les mélanges de ceux-ci,
le composant tout spécialement préféré étant le laurolactame (12 atomes de carbone).

8. Mélange à mouler de polyamides selon l'une des revendications précédentes, **caractérisé en ce que**
la proportion du composant (A) dans le mélange à mouler de polyamides est comprise dans la plage de 87,5 à 96,5 % en poids, de préférence de 89 à 96 % en poids et d'une manière particulièrement préférée de 90,5 à 94,99 % en poids, par rapport à la somme des composants (A) à (C) ; et/ou
la proportion du composant (B) dans le mélange à mouler de polyamides est comprise dans la plage de 3,5 à 8,5 % en poids, de préférence de 4,0 à 8,0 % en poids et d'une manière particulièrement préférée de 5,0 à 7,5 % en poids, par rapport à la somme des composants (A) à (C) ; et/ou
la proportion du composant (C) dans le mélange à mouler de polyamides est comprise dans la plage de 0 à 4 % en poids, de préférence de 0 à 3 % en poids et d'une manière particulièrement préférée de 0,01 à 2 % en poids, par rapport à la somme des composants (A) à (C).

9. Mélange à mouler de polyamides selon l'une des revendications précédentes, **caractérisé en ce que**
la fonctionnalisation du composant (B) a été réalisée par copolymérisation, et la proportion du composé utilisé pour la fonctionnalisation est de 3 à 25 % en poids, de préférence de 4 à 20 % en poids et d'une manière particulièrement préférée de 4,5 à 15 % en poids, par rapport au poids total du composant (B) ; et/ou
la fonctionnalisation du composant (B) a été réalisée par greffage, et la proportion du composé utilisé pour la fonctionnalisation est de 0,3 à 2,5 % en poids, de préférence de 0,4 à 2,0 % en poids et d'une manière particulièrement préférée de 0,5 à 1,9 % en poids, par rapport au poids total du composant (B).

10. Mélange à mouler de polyamides selon l'une des revendications précédentes, **caractérisé en ce que**
le composé utilisé pour la fonctionnalisation du composant (B) est choisi dans le groupe consistant en l'acide acrylique, l'acide méthacrylique, l'acide glycidylacrylique, l'acide glycidylméthacrylique, les esters de l'acide acrylique, les esters de l'acide méthacrylique, l'acide α-éthylacryhque, l'acide maléique, l'anhydride maléique, l'acide fumarique, l'acide itaconique, l'anhydride itaconique, l'acide citraconique, l'acide aconitique, l'acide tétrahydrophtalique, l'acide buténylsuccinique et les mélanges de ceux-ci, l'acide maléique, l'anhydride maléique, l'acide fumarique, l'acide itaconique, l'anhydride itaconique, l'acide aconitique et les mélanges de ceux-ci étant préférés, le composé particulièrement préféré étant l'anhydride maléique.

11. Mélange à mouler de polyamides selon l'une des revendications précédentes, **caractérisé en ce que**
les monomères Ba), Bb) et Bc) sont contenus dans le composant (B) selon les proportions en moles suivantes :
Ba) 65 à 90 % en moles, de préférence 65 à 87 % en moles et d'une manière particulièrement préférée 71 à 84 % en moles ;
Bb) 8 à 33 % en moles, de préférence 10 à 25 % en moles et d'une manière particulièrement préférée 12 à 20 % en moles ;
Bc) 2 à 25 % en moles, de préférence 3 à 20 % en moles et d'une manière particulièrement préférée 4 % à 9 % en moles ;
la somme des proportions en moles des monomères Ba), Bb) et Bc) étant de 100 % en moles.

12. Mélange à mouler de polyamides selon l'une des revendications précédentes, **caractérisé en ce que**
l'au moins un additif (C) est choisi dans le groupe consistant en les stabilisants inorganiques, les stabilisants organiques, en particulier les antioxydants, les antiozonants et les agents de protection contre la lumière, les lubrifiants, les colorants, les agents de marquage, les pigments inorganiques, les pigments organiques, les agents de démoulage, les additifs d'allongement de chaîne, les agents anti-adhérence de contact, les azurants optiques et les mélanges de ceux-ci.

13. Mélange à mouler de polyamides selon l'une des revendications précédentes, **caractérisé en ce que**
l'indice de brillance à 60°, déterminé selon DIN EN ISO 2813(2015) à 23 °C sur des plaques de dimensions 60 x 60 x 2 mm, après traitement de l'éprouvette avec une solution de savon pendant 30 ± 2 min à 63 ± 2 °C, est d'au moins 75 % et de préférence d'au moins 80 % ; et/ou
la résistance au choc sur barreau entaillé, déterminée selon DIN EN ISO 179/2 eA (2000), est d'au moins 70 kJ/m², de préférence d'au moins 75 kJ/m² et d'une manière particulièrement préférée d'au moins 80 kJ/m² ; et/ou
le module d'élasticité en traction, déterminé selon DIN EN ISO 527 (1997), est d'au moins 2100 MPa, de préférence d'au moins 2200 MPa et d'une particulièrement préférée d'au moins 2300 MPa ; et/ou
l'indice de brillance à 60°, déterminé selon DIN EN ISO 2813 (2015), est d'au moins 80 %, de préférence d'au moins 85 % et d'une manière particulièrement préférée d'au moins 90 %.

14. Objet moulé contenant un mélange à mouler de polyamides selon l'une des revendications 1 à 13 ou constitué de ce mélange à mouler de polyamides.

15. Objet moulé selon la revendication 14, **caractérisé en ce que** l'objet moulé est choisi dans le groupe consistant en les éléments décoratifs, en particulier dans l'habitacle des automobiles ou dans le domaine de la mode, les articles de sport, en particulier les chaussures de ski, les semelles intercalaires pour chaussures de sport, les articles de loisirs, les jouets, en particulier les éléments de construction, les composants de construction, les figurines ou les maquettes, les articles de ménage, en particulier les plats, les boîtes ou les gobelets, les composants de lunettes, les ferrures pour meubles, les semelles intérieures, les pièces de construction et éléments apparents pour appareils dans le domaine sanitaire, le domaine hygiénique et le domaine cosmétique, les éléments de chaussures de sécurité, en particulier les couvercles, les boîtiers et les éléments de boîtiers d'appareils électriques et électroniques, les coques de protection pour téléphones mobiles, les pièces visibles des ordinateurs et dans le domaine des télécommunications, les tubes, les tuyaux flexibles et les composants de cigarettes électroniques.
